# EUROPEAN PATENT APPLICATION

(11) **EP 0 923 018 A2**
(43) Date of publication of application: **16.06.1999**
(21) Application number: 98250434.2
(22) Date of filing: 10.12.1998
(51) Int. Cl.: G06F 1/00

(54) **Personal authentication system**

(30) Priority: 10.12.1997 JP 34017497
(71) Applicant: NEC CORPORATION, Tokyo (JP)
(72) Inventor: Hoshino, Satoshi, Minato-ku, Tokyo (JP)
(74) Representative: Patentanwälte Wenzel & Kalkoff

(57) **Abstract**

An authentication system includes a computer 1, an input means 3, a fingerprint database 4, a display device 10, an adapter circuit 11, and a fingerprint collating device 12. The input means 3 includes a keyboard 8 and a fingerprint sensor 9. The fingerprint sensor 9 is integrated into the keyboard 8. The authentication system allows a user to perform predetermined operation to the computer 1, only when fingerprint information of the user detected by the fingerprint collating device 12 is coincident with fingerprint information registered in the fingerprint database 4.

## Description

### BACKGROUND OF THE INVENTION:

### Field of the Invention

This invention relates to a personal authentication system and, in particular, to a personal authentication system which performs the personal authentication by identifying a user's fingerprint.

### Description of the Related Art

In the past, a fingerprint reading system has been disclosed in Japanese Laid-Open Publication No. H1-154295 (namely, 154295/1989). The system has a relatively large device, for example, an ATM(automatic teller machine) or an ECR (electronic cash register). In the system, a fingerprint reading head is arranged on a top surface of a key which performs a specific function determined in the ATM in response to being pushed. The system extracts a user's fingerprint from the top surface of the key to authenticate the user when he pushes the key in question by one of his fingers.

Other conventional personal authentication systems authenticate a user by checking a password supplied by the user, when the user logs in a computer system or an application.

However, each of these conventional systems has problems. In the former system, an input device tends to be large in size if a fingerprint reading system is integrated into the input device, such as a keyboard used in a personal computer system because it has never been considered that the fingerprint reading system is used in a small-sized input device.

On the other hand, in the later systems, the password can be easily stolen by peeping into a screen on which the password is supplied, or easily inferred from the user's birthday etc. As a result, the systems are apt to be undesirably or illegally utilized by people other than the user.

### SUMMARY OF THE INVENTION:

Therefore, it is an object of the invention to provide a personal authentication system which includes a small-sized input device.

It is another object of the invention to provide a personal authentication system which can prevent use of the system by other people.

According to an embodiment of the invention, a personal authentication system including computer for use in authenticating a user is provided. The system comprises an input means by which the user input an instruction to the computer, a fingerprint sensor which detects fingerprint information of the user when the user touches the sensor by the user's finger, a storage means which is connected to the computer and registers fingerprint information of users in advance, and a collating means which is connected to the computer and collates the fingerprint information detected by the fingerprint sensor with the fingerprint information registered in the storage means.

Further the system allows the user to have predetermined operation performed by the computer, when it is determined that the detected fingerprint information is coincident with the registered fingerprint information by the collating means.

### BRIEF DESCRIPTION OF THE DRAWINGS:

Fig. 1 shows a block diagram of a personal authentication system according to a first embodiment of the invention;
Fig. 2 schematically shown a keyboard and a fingerprint sensor of the personal authentication system shown in Fig. 1;
Fig. 3 shows a flow chart representing log on operation of the personal authentication system shown in Fig. 1;
Fig. 4 shows a flow chart representing data encrypting operation of the personal authentication system shown in Fig. 1;
Fig. 5 shows a flow chart representing data decoding operation of the personal authentication system shown in Fig. 1;
Fig. 6 shows a flow chart representing data signing operation of the personal authentication system shown in Fig. 1;
Fig. 7 shows a flow chart representing signature verification operation of the personal authentication system shown in Fig. 1; and
Fig. 8 shows a block diagram of a personal authentication system according to a second embodiment of the invention.

### DESCRIPTION OF THE PREFERRED EMBODIMENT:

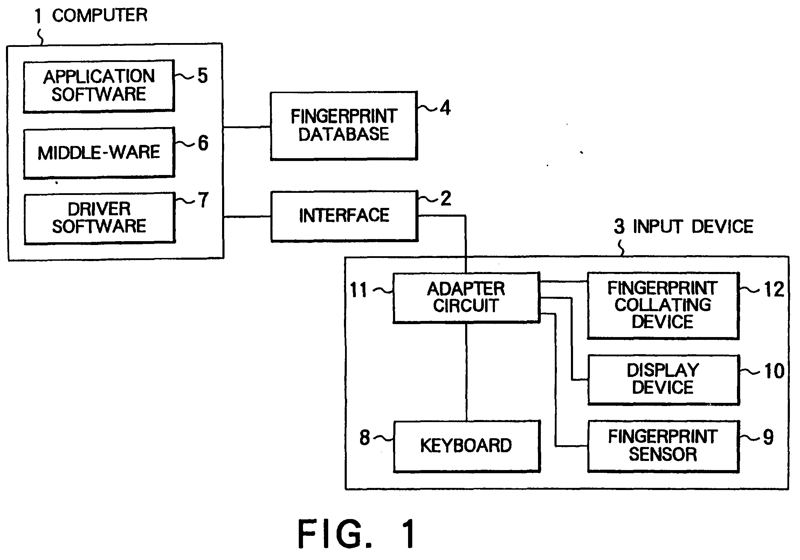

Fig. 1 shows a first embodiment of a personal authentication system of the invention. As shown in Fig. 1, the personal authentication system includes a computer 1, an input device 3 connected to the computer 1 via an interface 2, and a fingerprint database 4 connected to the computer 1. The computer 1 includes an application software 5, middle-ware 6 which communicates with the application software 5, and a driver software 7 which communicates with the middle-ware 6.

The input device 3 includes a keyboard 8, a fingerprint sensor 9, a display device 10, a fingerprint collating device 12, and an adapter circuit 11 which is connected to these elements 8 - 10, 12. The adapter circuit 11 is also connected to the computer 1 via the interface 2.

The computer 1 may be, for example, a personal computer (PC), a workstation (WS), a server computer, or a super computer. The application software 5 realizes a plurality of operations, such as a log-on operation to the computer 1, an operation of encrypting data, an operation of decoding data, an operation of signing data, and an operation of verifying a signature.

The middle-ware 6 comprises capabilities of authentication result notification and device authentication of the keyboard 8. The middle-ware 6 further comprises the capability of personal authentication by fingerprint, if the fingerprint collating device 12 has no capability of personal authentication.

The interface 2 is structured based on standard of device interface such as RS-232C or USB.

While the input device 3 includes the keyboard 8, the fingerprint sensor 9, the display device 10, the fingerprint collating device 12, and the adapter circuit 11, the display device 10 and the fingerprint collating device 12 may not be included in the input device 8 but may be individually and directly connected to the computer 1.

To detect and collate fingerprint, various kinds of well known conventional methods may be used which may be, for example, methods disclosed in Japanese Laid-Open Publication Nos. S55-138174 (namely, 138174/1980) and S56-24675 (namely, 24675/1981).

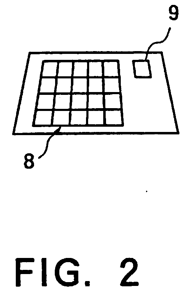

As shown in Fig. 2, the fingerprint sensor 9 is integrated into the input device 3. Responsive to a user's operation of touching the fingerprint sensor 9, the input device 3 outputs a signal including detected fingerprint information to the computer 1.

The fingerprint sensor 9 may be composed of an optical sensor or a semiconductor sensor. When a user's finger touches the fingerprint sensor 9, the sensor 9 detects fingerprint information, generates a signal from the information, and sends the signal to the adapter circuit 11.

The fingerprint information of users is registered in advance in the fingerprint database 4. Therefore, the computer 1 can collate the fingerprint detected by the fingerprint sensor 9 with the fingerprint registered in the fingerprint database 4. If the fingerprints are coincident with each other, the computer 1 allows the user to perform the above operations, for example, log-on or encrypting data.

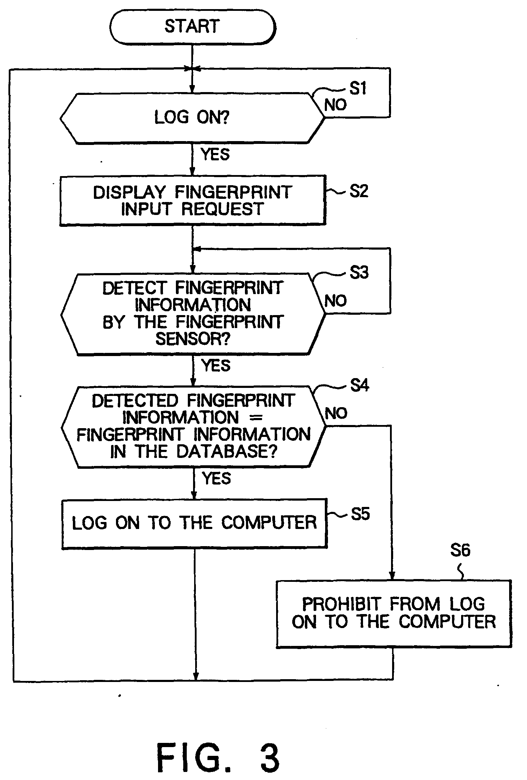

Flow charts shown in Figs. 3, 4, 5, 6, and 7 are related to operations of log-on, encrypting data, decoding data, signing data, and verifying a signature, respectively. Hereinafter, the operations of the invention will be described with reference to Figs. 3 through 7.

In Fig. 3, at first, it is determined whether a user wants to log-on to a system or application at step S1. If the user want to log-on, fingerprint input request message is displayed onto the display device 10 at step S2. Next, it is determined whether or not the sensor 9 detects the user's fingerprint information at step S3.

If the sensor 9 detects the fingerprint information, the process proceeds to step S4 and then it is determined whether the detected fingerprint information is coincident with the fingerprint information registered in the fingerprint database 4.

If the detected fingerprint information is coincident with the registered fingerprint information, the user is allowed to log-on to the computer 1 at step S5. Otherwise, the user is prohibited from using the computer 1 at step S6.

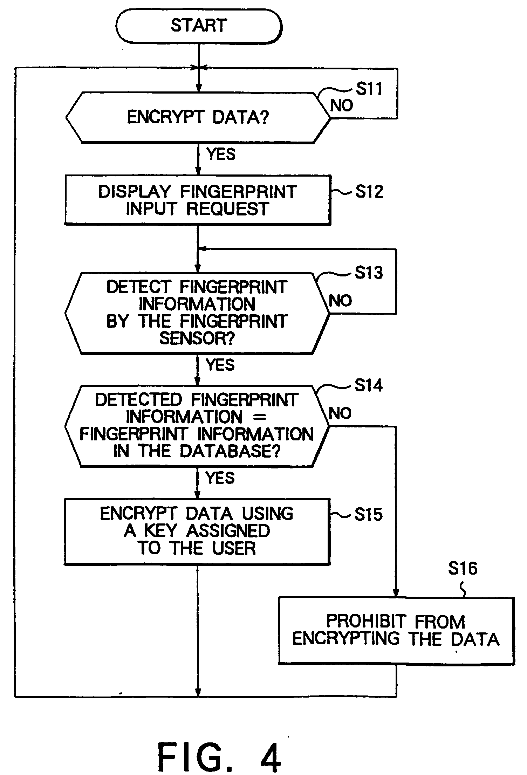

In Fig. 4, at first, it is determined whether or not a user wants to encrypt data at step S11. If the user wants to encrypt the data, fingerprint input request message is displayed onto the display device 10 at step S12. Next, it is determined wither the sensor 9 detects the user's fingerprint information at step S13.

If the sensor 9 detects the fingerprint information, the process proceeds to step S14 and then it is determined whether the detected fingerprint information is coincident with the fingerprint information registered in the fingerprint database 4.

If the detected fingerprint information is coincident with the registered fingerprint information, the user is allowed to encrypt the data, at step S15, using a key assigned to the user (each user having a key which is different from each other and which may be stored in the fingerprint database 4). Otherwise, the user is prohibited from encrypting the data at step S16.

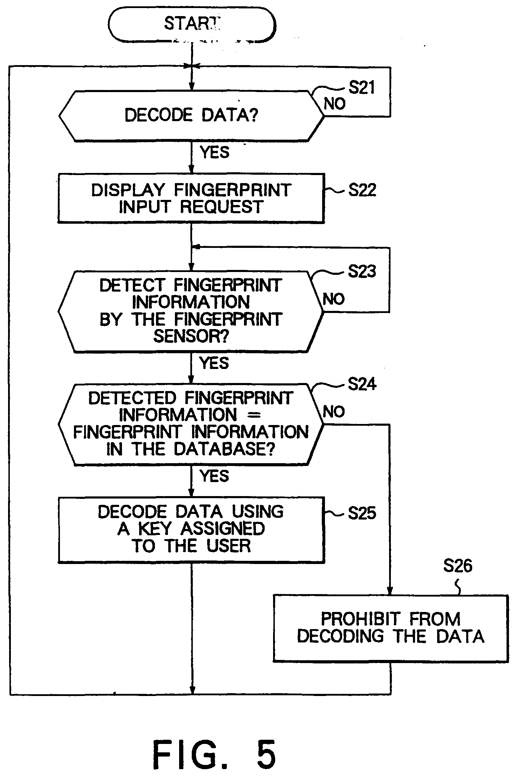

In Fig. 5, at first, it is determined whether a user want to decode data at step S21. If the user wants to decode the data, fingerprint input request message is displayed onto the display device 10 at step S22. Next, it is determined whether the sensor 9 detects the user's fingerprint information at step S23.

If the sensor 9 detects the fingerprint information, the process proceeds to step S24 and then it is determined whether the detected fingerprint information is coincident with the fingerprint information registered in the fingerprint database 4.

If the detected fingerprint information is coincident with the registered fingerprint information, the user is allowed to decode the data using a key assigned to the user at step S25. Otherwise, the user is prohibited from decoding the data at step S26.

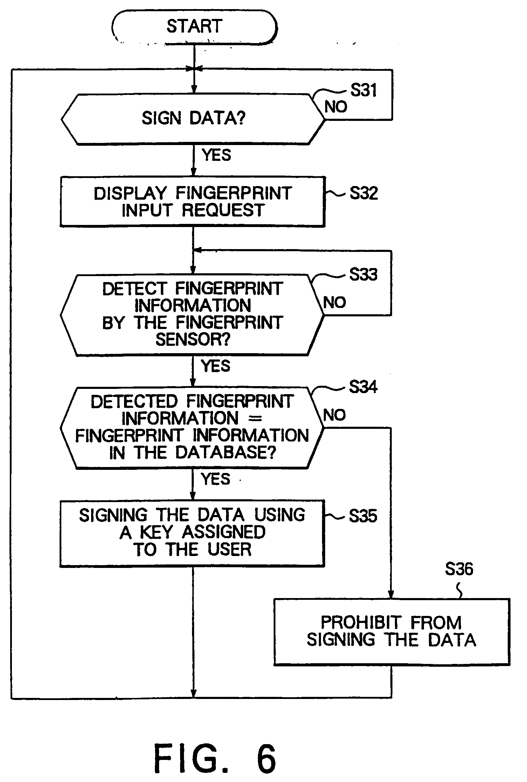

In Fig. 6, at first, it is determined whether a use wants to sign data at step S31. If the user want to sign the data, fingerprint input request message is displayed onto the display device 10 at step S32. Next, it is determined whether the sensor 9 detects the user's fingerprint information at step S33.

If the sensor 9 detects the fingerprint information, the process proceeds to step S34 and then it is determined whether the detected fingerprint information is coincident with the fingerprint information registered in the fingerprint database 4.

If the detected fingerprint information is coincident with the register fingerprint information, the user is allowed to sign the data using a key assigned to the user at step S35. Otherwise, the user is prohibited from signing the data at step S36.

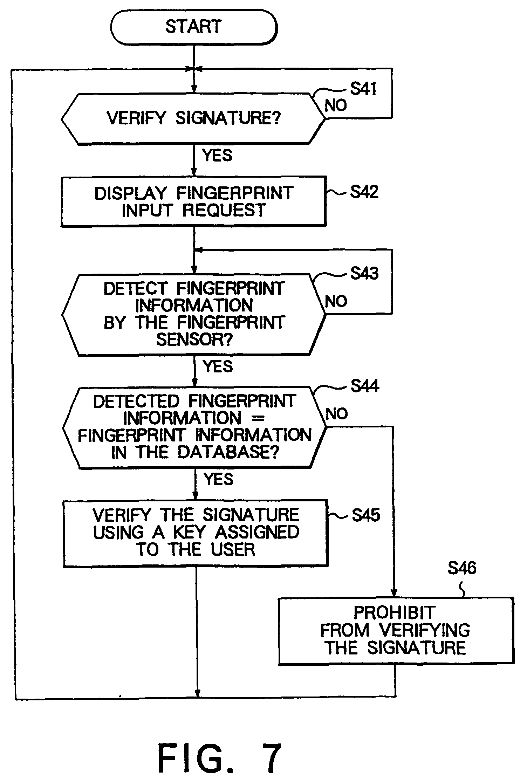

In Fig. 7, at first, it is determined whether a user want to verify a signature at step S41. If the user want to verify the signature, fingerprint input request message is displayed onto the display device 10 at step S42. Next, it is determined whether the sensor 9 detects the user's fingerprint information at step S43.

If the sensor 9 detects the fingerprint information, the process proceeds to step S44 and then it is determined whether the detected fingerprint information is coincident with the fingerprint information registered in the fingerprint database 4.

If the detected fingerprint information is coincident with the registered fingerprint information, the user is allowed to verify the signature using a key assigned to the user at step S45. Otherwise, the user is prohibited from verifying the signature at step S46.

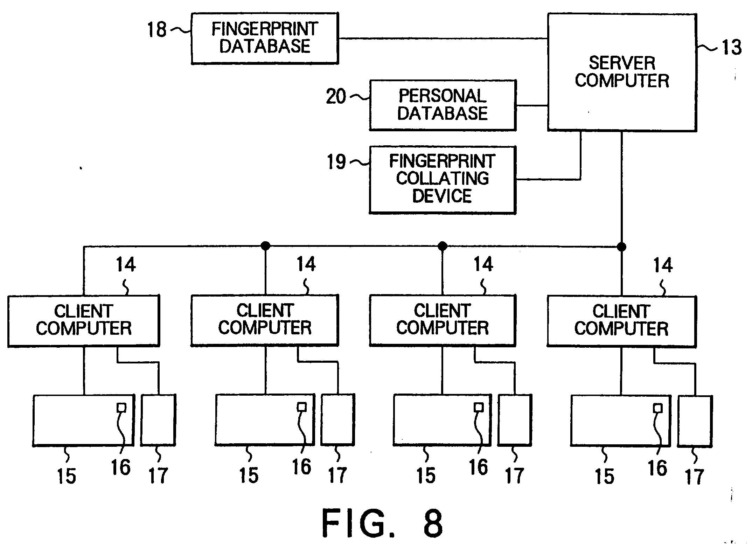

Next, description of a second embodiment of the invention will be made with reference to Fig. 8. Fig. 8 shows a block diagram of a second embodiment of the personal authentication system of the invention. The system shown in Fig. 8 includes a server computer 13, which is connected to a plurality of client computers 14, a fingerprint database 18, a fingerprint collating device 19, and a personal database 20.

Each client computer 14 includes a keyboard 15, a fingerprint sensor 16 integrated into the keyboard 15, and a display device 17. The fingerprint database 18 stores a plurality of fingerprint information of users in advance. Fingerprint information of the user who is allowed to use the system is stored in the database 18.

The fingerprint collating device 19 collates fingerprint information detected by the fingerprint sensor 16 with the fingerprint information stored in the fingerprint database 18. The personal database 20 includes a plurality of personal data of users.

The second embodiment of the invention is the same as the first embodiment of the invention shown in Figs. 1 through 7, except that the second embodiment includes a plurality of client computers 14, keyboards 15, and display devices 16 and the personal database 20.

In the second embodiment of the invention, when the fingerprint collating device 19 collates the fingerprint information of a user detected by the fingerprint sensor 16 with the fingerprint information registered in the fingerprint database 18 and determines that the detected fingerprint information is identical with the registered fingerprint information, the server computer 13 sends the personal data corresponding to the user in the personal database 20 to the client computer 14 incoming the fingerprint information.

As stated above, a personal authentication system of the invention has a small-sized input device because of the integration of a fingerprint sensor into a keyboard. Further, the system is not able to be used by other people because of personal authentication using fingerprint.

## Claims

1. A personal authentication system including a computer (1) for use in authenticating a user, comprising:
an input means (8) by which the user inputs an instruction to the computer (1);
a fingerprint sensor (9) which detects fingerprint information of the user when the user touches the sensor (9) by his finger;
a storage means (4) which is connected to the computer (1) and registers fingerprint information of users in advance; and
a collating means (12) which is connected to the computer (1) and collates the fingerprint information detected by the fingerprint sensor (9) with the fingerprint information registered in the storage means (4), and
when it is determined that the detected fingerprint information is coincident with the registered fingerprint information by the collating means (12), the computer (1) allows the user to perform predetermined operation on the computer (1).

2. The system of claim 1, further comprising:
a display means (10) which is connected to the computer (1) and displays fingerprint input request message to the user.

3. The system of claim 1, wherein the fingerprint sensor (9) is integrated into the input means (8).

4. The system of claim 1, wherein the predetermined operation to the computer (1) is one of operations including log-on operation to the computer (1), encrypting data by using a key assigned to the user, decoding data by using a key assigned to the user, signing data by using a key assigned to the user, and verifying signature by using a key assigned to the user.

5. A personal authentication system, for use in authenticating a user, including a server computer (13) and a plurality of client computers (14), each client computer (14) comprising:
an input means (15) by which the user inputs an instruction to the client computer (14) or the server computer (13); and
a fingerprint sensor (16) which detects fingerprint information of the user when he touches the sensor (16) by his finger,
and the server computer (13) comprising:
a storage means (18) which registers fingerprint information of users in advance; and
a collating means (19) which collates the fingerprint information detected by the fingerprint sensor (16) with the fingerprint information registered in the storage means (18).

6. The system of claim 5, wherein the sever computer (13) further comprises a second storage means (20) which stores personal information of users,
and when it is determined that the detected fingerprint information is coincident with the registered fingerprint by the collating means (19), the server computer (13) supplies the client computer (14) which the fingerprint information is detected with the personal information corresponding to the user in the second storage means (20).

7. A method of authenticating a user of a computer, comprising the steps of:
registering fingerprint information of users in advance;
detecting the fingerprint information when the user touches the fingerprint sensor by his finger;
collating the detected fingerprint information with the registered fingerprint information; and
allowing the user to perform predetermined operation with the computer, when it is determined that the detected fingerprint information is coincident with the registered fingerprint information.

8. A computer readable medium which stores a program operable for authenticating a user of a computer, comprising the steps of:
registering fingerprint information of users in advance;
detecting the fingerprint information when the user touches the fingerprint sensor by his finger;
collating the detected fingerprint information with the registered fingerprint information; and
allowing the user to perform predetermined operation with the computer, when it is determined that the detected fingerprint information is in coincident with the registered fingerprint information.
